# FASCICULE DE BREVET EUROPEEN

(11) **EP 0 290 511 B1**
(45) Date de publication et mention de la délivrance du brevet: **20.09.1995**
(21) Numéro de dépôt: 87907236.1
(22) Date de dépôt: 29.10.1987
(51) Int. Cl.: H01M 6/16

(54) **NOUVEAU MATERIAU A CONDUCTION IONIQUE CONSTITUE PAR UN SEL EN SOLUTION DANS UN ELECTROLYTE LIQUIDE**
NEUES IONENLEITENDES MATERIAL, BESTEHEND AUS EINEM SALZ, GELÖST IN EINEM FLÜSSIGEN ELEKTROLYTEN
NEW IONIC CONDUCTION MATERIAL COMPRISED OF A SALT DILUTED IN A LIQUID ELECTROLYTE

(30) Priorité: 30.10.1986 FR 8615114
(43) Date de publication de la demande: 17.11.1988
(73) Titulaire: CENTRE NATIONAL DE LA RECHERCHE SCIENTIFIQUE (CNRS), 75700 Paris Cedex 07 (FR); HYDRO-QUEBEC, Montreal, Québec H2Z 1A4 (CA)
(72) Inventeur: ARMAND, Michel, F-38410 S.-Martin-d'Uriage (FR); GAUTHIER, Michel, Québec J5R 1V0 (CA); MULLER, Daniel, F-64000 Pau (FR)
(74) Mandataire: Sueur, Yvette
(86) Numéro de dépôt international: FR8700428
(87) Numéro de publication internationale: WO8803331

(56) Documents cités:
- EP-A- 0 057 327
- EP-A- 0 096 629
- US-A- 4 104 450
- US-A- 4 293 623

## Description

La présente invention concerne un nouveau matériau à conduction ionique utilisable notamment comme électrolyte liquide pour la réalisation de générateurs électrochimiques de courant, tant primaires que secondaires.

Il a été décrit et revendiqué dans le brevet US n° 4.505.997 des sels utilisables notamment pour réaliser des électrolytes solides et dénommés des bis-perhalogénoacyl ou sulfonyl-amidures de métaux alcalins.

Selon l'invention, le matériau à conduction ionique est constitué par un sel en solution dans un solvant liquide aprotique polaire, ledit sel étant représenté par une des formules suivantes :

(I) M [RF-SO₂-N-SO₂-R′F]

(II) M [RF-SO₂-N-CO-R′F]

(III) M [RF-CO-N-CO-R′F]

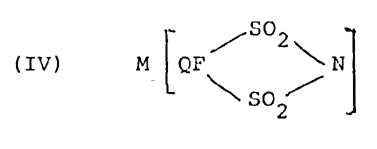

formules dans lesquelles :
- M est un métal alcalin, alcalino-terreux, un métal de transition ou une terre rare,
- RF et R'F, qui sont identiques ou différents, représentent chacun un radical perhalogéné, de préférence perfluoré, ayant de 1 à 12 atomes de carbone,
- QF est un radical divalent perfluoré ayant de 2 à 6 atomes de carbone.

De préférence, QF est C₂F₄ ou C₃F₆, et pour les composés de formule (I), les radicaux RF et R′F sont identiques et représentent CF₃.

Selon une autre caractéristique de l'invention, les sels ci-dessus sont dissous dans un solvant liquide aprotique polaire, choisi parmi
- les éthers linéaires tels que le diéthyléther, le diméthoxyéthane ou les éthers cycliques tels que le tétrahydrofurane, le dioxanne, le diméthyltétrahydrofurane,
- les esthers tels que le formiate de méthyle ou d'éthyle, le carbonate de propylène ou d'éthylène, les butyrolactones,
- les nitriles, acétonitriles, benzonitriles,
- les dérivés nitrés tels que le nitrométhane ou le nitrobenzène,
- les amides tels que le diméthylformamide, le diéthylformamide et la N-méthylpyrolidone,
- les sulfones tels que la diméthylsulfone, le tétraméthylène sulfone et autres sulfolanes.

En effet, ces sels possèdent, d'une manière surprenante, une grande solubilité dans ces différents types de solvants, cette solubilité étant supérieure à celle des sels utilisés en électrochimie liquide, par exemple des perchlorates.

De plus, la stabilité thermique, chimique et électrochimique des solutions ainsi réalisées est remarquable. En particulier, la réduction de l'anion correspondant ne s'observe pas avant le dépôt du métal et l'oxydation se produit à un potentiel électrochimique supérieur à 4 Volts par rapport à une électrode de lithium.

L'intérêt de ces nouveaux électrolytes liquide peut se trouver aussi dans la possiblité qu'ils offrent de réaliser très facilement des générateurs rechargeables fonctionnant selon un nombre très élevé de cycles, supérieur à 100, voire 500.

Les exemples qui suivent sont donnés à titre illustratif de l'invention, mais ne doivent pas être considérés comme limitatifs.

### Exemple 1

On a constitué un générateur électrochimique du type lithium/TiS₂ en utilisant comme électrode négative une feuille mince de lithium de 200 µm d'épaisseur, comme électrode positive une électrode poreuse formée par pressage d'une poudre de TiS₂, de granulométrie voisine de 10 µm, de latex de PTFE et de noir de carbone selon les proportions suivantes :
- poudre TiS₂: : 80 % en poids
- PTFE: : 10 % en poids
- noir de carbone: : 10 % en poids

Le pressage est effectué sur un collecteur de nickel déployé de 50 µm d'épaisseur et l'électrode ainsi assemblée à une épaisseur de 200 µm.

L'électrolyte est constitué par une solution 2M de Li(CF₃SO₂)₂N dans du carbonate de propylène imprégnant un séparateur microporeux en fibre de verre.

On a pu ainsi vérifier que le générateur fonctionne reversiblement à température ambiante sur un nombre de cycles supérieur à 100.

Le même générateur a été réalisé, mais le sel de lithium était en solution dans une solution 1M de tétrahydrofurane (THF).

De la même manière, plusieurs générateurs ont été cyclés avec succès et ils avaient les caractéristiques suivantes.

### Exemple 2

Electrode négative constituée par un feuillard de lithium, électrode positive constituée par du sulfure de molybdène, MoS₂ fritté sur un collecteur d'aluminium et ayant une épaisseur totale de 100 µm. L'électrolyte est constitué par une solution 1M de Li(CF₃SO₂)₂N dans un mélange de carbonate de propylène (40 % volumique) et de carbonate d'éthylène (60 % volumique).

### Exemple 3

Identique à l'exemple n° 2 mais le solvant est un mélange de 40 % de carbonate de propylène et de 60 % de diméthoxyéthane.

### Exemple 4

On a réalisé un générateur identique à celui de l'exemple n° 3 mais le matériau de l'électrode positive est un polycarbone fluoré de formule CFx tel que décrit et revendiqué dans la demande de brevet européen n° 0157818.

### Exemple 5

Le générateur est identique à celui de l'exemple 3 mais le sel en solution est un sel cyclique de formule :

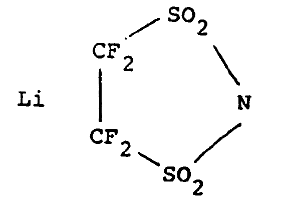

Le sel a été préparé selon le mode de synthèse décrit dans la demande de brevet européen n° 0057327.

### Exemple 6

On a fait cycler à température ambiante un générateur dans lequel l'électrode positive est constituée par un oxyde de manganèse MnO₂ et l'électrolyte est une solution de Li(CF₃SO₂)₂N 1M dans un mélange de diméthoxyéthane (50 % en volume) et de sulfolane.

Les exemples suivants concernent l'utilisation des nouveaux matériaux à conduction ionique selon l'invention pour d'autres applications que celles des générateurs électrochimiques.

### Exemples 7, 8, 9, 10

Réalisation de radicaux cations organiques.
7) On prépare un radical cation du pérylène dans une cellule électrochimique contenant comme électrolyte support une solution 1M de Li(CF₃SO₂)₂N dans un nitrométhane, par oxydation anodique sur du platine à une tension de 1,5 Volt par rapport à une électrode à argent. On obtient ainsi des cristaux de périlène représentés par la formule

   [périlène]₂ (CF₃SO₂)₂N

   Ces cristaux sont semi-conducteurs et présentent une meilleure stabilité que lorsque l'on utilise un perchlorate de lithium comme sel en solution dans l'électrolyte support.
8) On prépare un poly(pyrrole) par oxydation du monomère dans une solution 0,1M de Li(C₄F₉SO₂)₂N dans de l'acétonitrile. On obtient ainsi un film anodique qui est très bon conducteur (100 ohm⁻¹ cm⁻¹) et stable à l'air et à l'humidité.
9) On prépare, de même que dans l'exemple 8, un poly(pyrrole) en utilisant une solution 0,1M de

   K [ CF₃SO₂-N-CO-CF₃]

   dans de l'acétonitrile.
   On obtient un film présentant une conductivité de l'ordre de 500 ohm⁻¹ cm⁻¹.
10) On prépare un poly(aniline) par oxydation anodique du monomère dans une solution 1M de Na [CF₃SO₂]N dans CH₃NO₂.

On obtient un film présentant une conductivité supérieure à 100 ohm⁻¹ cm⁻¹.

Le même film mais réalisé dans du thiophène présente une conductivité de l'ordre de 200 ohm⁻¹ cm⁻¹.

### Exemple 11

Cet exemple est relatif à l'utilisation des nouveaux matériaux selon l'invention pour le dopage de polymères, tels que le poly(acetylène). On dope électrochimiquement un film de poly(acétylène) dans une solution de K [CF₃SO₂]₂N dans le nitrométhane, le film obtenu est stable à l'air avec une conductivité de l'ordre de 1000 ohm⁻¹ cm⁻¹.

Ainsi qu'il apparaît clairement de ces exemples, l'intérêt de ces nouveaux matériaux à conduction ionique réside non seulement dans la réalisation de générateurs électrochimiques rechargeables selon un grand nombre de cycles mais aussi pour :
- la préparation de radicaux cations organiques stables tels que ceux de l'hexaméthoxydiphénylamine ou du tétrathiofulvalène ou de polyaromatiques condensés,
- le dopage de polymères à liaisons conjuguées de type polyaniline, polyacétylène, polythiophène, polypyrrole.

## Revendications

1. Nouveau matériau à conduction ionique constitué par un sel en solution dans un solvant liquide aprotique polaire caractérisé en ce que le sel est représenté par une des formules suivantes :
(I) M [RF-SO₂-N-SO₂-R′F]
(II) M [RF-SO₂-N-CO-R′F]
(III) M [RF-CO-N-CO-R′F] 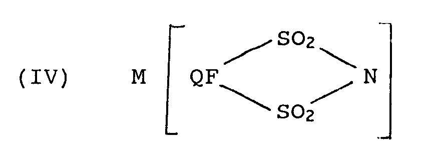
formules dans lesquelles :
- M est un métal alcalin, alcalino-terreux, un métal de transition ou une terre rare,
- RF et R′F sont identiques ou différents et représentent chacun un radical perhalogéné, de préférence perfluoré, ayant de 1 à 12 atomes de carbone,
- QF est un radical divalent perfluoré ayant de 2 à 6 atomes de carbone.

2. Nouveau matériau selon la revendication 1, caractérisé en ce que RF et R′F sont identiques et représentent CF₃.

3. Nouveau matériau selon l'une des revendications précédentes, caractérisé en ce que le sel est en solution dans un solvant polaire aprotique choisi parmi le groupe suivant :
- les éthers linéaires tels que le diéthyléther, le diméthoxyéthane ou les éthers cycliques tels que le tétrahydrofurane, le dioxanne, le diméthyltétrahydrofurane,
- les esters tels que le formiate de méthyle ou d'éthyle, le carbonate de propylène ou d'éthylène, les butyrolactones,
- les nitriles, acétonitriles, benzonitriles,
- les dérivés nitrés tels que le nitrométhane ou le nitrobenzène,
- les amides tels que le diméthylformamide, le diéthylformamide et la N-méthylpyrolidone,
- les sulfones tels que la diméthylsulfone, le tétraméthylène sulfone et autres sulfolanes,
- les dérivés nitrés,
- les amides,
- les sulfones et sulfolanes.

4. Nouveau matériau selon l'une des revendications précédentes, caractérisé en ce que le sel est Li(CF₃SO₂)₂N.

5. Cellule électrochimique comportant deux électrodes ayant une polarité opposée, caractérisée en ce que l'électrolyte est un matériau selon l'une quelconque des revendications 1 à 4.

6. Générateur électrochimique caractérisé en ce qu'il est constitué par une cellule électrochimique selon la revendication 5 et qu'il comporte une électrode négative de lithium.

7. Générateur selon la revendication 6, caractérisé en ce que le sel de l'électrolyte est Li(CF₃SO₂)₂N.

8. Procédé de préparation de radicaux cations organiques par oxydation anodique d'un monomère dans une solution électrolytique, caractérisé en ce qu'il est mis en oeuvre dans une cellule électrochimique selon la revendication 5.

9. Procédé de dopage de polymères, comportant le traitement électrochimique desdits polymères dans une solution électrolytique, caractérisé en ce qu'il est mis en oeuvre dans une cellule électrochimique selon la revendication 5.

## Patentansprüche

1. Neues ionenleitendes Material, das aus einem Salz in Lösung in einem flüssigen aprotischen polaren Lösungsmittel besteht, dadurch gekennzeichnet, daß das Salz durch eine folgenden Formeln dargestellt ist:
(I) M [RF-SO₂-N-SO₂-R′F]
(II) M [RF-SO₂-N-CO-R′F]
(III) M [RF-CO-N-CO-R′F] 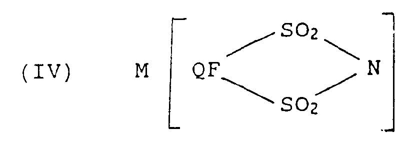
in denen
M ein Alkalimetall, ein Erdalkalimetall, ein Übergangsmetall oder ein Seltenerdmetall ist,
RF und R′F, die identisch oder voneinander verschieden sind, jeweils einen perhalogenierten, vorzugsweise perfluorierten Rest mit 1 bis 12 Kohlenstoffatomen darstellen,
QF ein zweiwertiger perfluorierter Rest mit 2 bis 6 Kohlenstoffatomen ist.

2. Neues Material nach Anspruch 1, dadurch gekennzeichnet, daß Rf und R′F identisch sind und für CF₃ stehen.

3. Neues Material nach einem der vorhergehenden Ansprüche, dadurch gekennzeichnet, daß das Salz in Lösung in einem polaren aprotischen Lösungsmittel vorliegt, das aus der folgenden Gruppe ausgewählt ist:
- linearen Ethern, wie Diethylether, Dimethoxyethan oder zyklischen Ethern, wie Tetrahydrofuran, Dioxan, Dimethyltetrahydrofuran,
- Estern, wie Methyl- oder Ethylformiat, Propylen- oder Ethylenkarbonat, Butyrolactonen,
- Nitrilen, Acetonitrilen, Benzonitrilen,
- nitrierten Derivaten, wie Nitromethan oder Nitrobenzol,
- Amiden, wie Dimethylformamid, Diethylformamid und N-Methylpyrrolidon,
- Sulfonen, wie Dimethylsulfon, Tetramethylensulfon und anderen Sulfolanen,
- nitrierten Derivaten,
- Amiden,
- Sulfonen und Sulfolanen.

4. Neues Material nach einem der vorhergehenden Ansprüche, dadurch gekennzeichnet, daß das Salz Li(CF₃SO₂)₂N ist.

5. Elektrochemische Zelle, die zwei Elektroden mit entgegengesetzter Polarität umfaßt, dadurch gekennzeichnet, daß der Elektrolyt ein Material nach einem der Ansprüche 1 bis 4 ist.

6. Elektrochemischer Generator, dadurch gekennzeichnet, daß er aus einer elektrochemischen Zelle nach Anspruch 5 besteht und eine negative Lithiumelektrode umfaßt.

7. Generator nach Anspruch 6, dadurch gekennzeichnet, daß das Salz des Elektrolyten Li(CF₃SO₂)₂N ist.

8. Verfahren zur Herstellung von organischen kationischen Resten durch anodische Oxidation eines Monomers in einer elektrolytischen Lösung, dadurch gekennzeichnet, daß es in einer elektrochemischen Zelle nach Anspruch 5 durchgeführt wird.

9. Verfahren zur Dotierung von Polymeren, umfassend die elektrochemische Behandlung der Polymere in einer elektrolytischen Lösung, dadurch gekennzeichnet, daß es in einer elektrochemischen Zelle nach Anspruch 5 durchgeführt wird.

## Claims

1. New ion conductive material consisting of a salt in solution in a liquid polar aprotic solvent, characterized in that the salt is represented by one of the following formulas :
(I) M[RF-SO₂-N-SO₂-RF′]
(II) M[RF-SO₂-N-CO-RF′]
(III) M[RF-CO-N-CO-RF′] 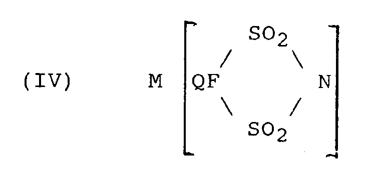
wherein :
- M is an alkaline or alkaline earth metal, a transition metal or a rare earth,
- RF and R′F are identical ou different and each represent a perhalogen radical, preferably a perfluorinated radical, having from 1 to 12 carbon atoms,
- QF is a perfluorinated bivalent radical having from 2 to 6 carbone atoms.

2. New material according to claim 1, characterized in that RF and R′F are identical and represent CF₃.

3. New material according to one of the preceeding claims, characterized in that the salt is in solution in a polar aprotic solvent selected from the group consisting of :
- linear ethers such as diethylether, dimethoxyethane, or cyclic ethers such as tetrahydrofurane, dioxane, dimethyltetrahydrofurane,
- esters such as methyl or ethyl formate, propylene or ethylene carbonate, butyrolactones,
- nitriles, acetonitriles, benzonitriles,
- nitrate derivatives such as nitromethane ou nitrobenzene,
- amides, such as dimethylformamide, diéthylformamide, and N-methylpyrolidone,
- sulfones, such as dimethylsulfone, tetramethylene sulfone and other sulfolanes,
- nitrates derivatives,
- amides,
- sulfones and sulfolanes.

4. New material according to one of the preceeding claims, characterized in that the salt is Li(CF₃SO₂)₂N.

5. Electrochemical cell comprising two electrodes with opposite polarities, characterized in that the electrolyte is a material according to any one of claims 1 to 4.

6. Electrochemical generator, characterized in that it consists of an electrochemical cell according to claim 5 and that it comprises a negative lithium electrode.

7. Generator according to claim 6, characterized in that the salt in the electrolyte is Li(CF₃SO₂)₂N.

8. Process for the production of organic cation radicals by means of an anodic oxidation of a monomer in an electrolytic solution, characterized in that it is performed in an electrochemical cell according to claim 5.

9. Process for the doping of polymers, comprising an electrochemical treatment of said polymers in an electrochemical solution, characterized in that it is performed in an electrochemical cell according to claim 5.
